# EUROPEAN PATENT APPLICATION

(11) **EP 4 704 017 A1**
(43) Date of publication of application: **04.03.2026**
(21) Application number: 24199007.6
(22) Date of filing: 06.09.2024
(51) Int. Cl.: G06Q 30/0251, G06Q 30/0241, G06F 16/783, G06Q 30/0601, H04N 21/254, H04N 21/81, H04N 21/234

(54) **AN E-COMMERCE DIGITAL MARKETPLACE SHOPPING SYSTEM**

(30) Priority: 03.09.2024 PT 2024119674
(71) Applicant: Guripedil Unipessoal Lda, 3700-121 São João da Madeira (PT)
(72) Inventor: DUARTE VALENTE, NUNO FILIPE, 3700-121 SÃO JOÃO DA MADEIRA (PT)
(74) Representative: Pereira da Cruz, Joao

(57) **Abstract**

It is described an e-commerce marketplace system, that uses object recognition techniques to extract relevant information from multimedia data being played by a user player device (4), and use it to segment and personalise digital advertising, which advertise specific exchange items that can be purchased through an integrated marketplace. As a result, it is possible to shorten the consumer journey path and facilitate the purchasing process, since all the entities involved are integrated and operating in a synchronised manner. To this end, the system may be comprised by a processor unit (1), including an item recognition module (1.1) and a filter module (1.2), an advertising unit (2) and a digital marketplace shopping unit (3).

## Description

### TECHINCAL FIELD

The present disclosure generally relates to electronic commerce (e-commerce) and in particular, to object recognition and digital advertising techniques for e-commerce, based on multimedia data.

### PRIOR ART

Digital advertising and e-commerce are activities that promote the advertisement of marketable products or services, hereinafter referred to as exchange items, typically through a digital platform, with the underlying purpose of triggering the consumer's desire to purchase the advertised exchange items. These activities depend on the processing of large volumes of data, which may concern not only the exchange items being advertised and subsequently transacted, but also to marketing and economic transaction data relating to the different types of users of these platforms, i.e. consumers (who will buy the exchange items be advertised), advertisers (or exchange item providers, who will make exchange items available for trading) or publishers (the owners of digital advertising slots that will be used to advertise exchange items), in order to carry out efficient and satisfactory transactions. Because of that, digital advertising and e-commerce activities involve the execution of computationally complex processes in order to integrate the dynamics of the different actors involved in the e-commerce value chain.

One of the ways of obtaining data on the exchange items to be advertised and transacted is through object recognition, for example using data processing such as computer vision techniques, which consists of recognizing and classifying items present in multimedia data, for example in data frames constituting image or video data, using specific algorithms and machine learning.

However, existing e-commerce systems present several limitations.

As far as the recognition stage is concerned, its effectiveness depends on the resolution, contrast, lighting and perspective of the data to be processed, which can lead to errors or inaccuracies in the recognition and classification of items. In addition, the data processing for the purpose of generating targeted advertising is inadequate or insufficient, generating noise or redundancies that affect the segmentation and personalisation of digital advertising. Furthermore, the interaction between data management platforms that store and organise consumer, advertiser and publisher data, and the marketplace platforms that are responsible for carrying out purchase actions, is inefficient and time-consuming, compromising the profitability and satisfaction of the actors involved. In addition, the digital advertising systems are, by its nature, invasive. For example, in the context of an OTT multimedia broadcasting system, it is particularly disadvantageous for viewers (i.e., the consumers) to be forced to watch an advertisement which interrupts their viewing of the streamed multimedia content. Besides that, advertisers and publishers are unable to extract reliable information about the user's interest in a particular product being advertised.

The consequence of these limitations is that integration between online advertising and e-commerce is weak or non-existent, which compromise the conversion of digital advertisements into purchases and reducing business opportunities. In fact, it can be seen that existing solutions focus mainly on the item recognition process, which is reflected in an implementation approach limited to the exchange items to be traded, without integration with the other actors involved in the process, i.e., consumers, advertisers and publishers, making the overall process inefficient.

The present solution intended to innovatively overcome such issues.

### SUMMARY OF THE DISCLOSURE

It is an object of the present disclosure an e-commerce digital marketplace shopping system, which aims to solve the limitations presented by state-of-the-art systems, by integrating advertising and e-commerce sub-system.

More particularly, the system uses object recognition techniques to extract relevant information from multimedia data such as image or video data to be broadcast, and use it to segment and personalise digital advertising, which advertise specific exchange items that can be purchased through an integrated digital marketplace shopping. As a result, it is possible to shorten and facilitate the purchasing process, in particular the consumer journey in a non-invasive form of advertising, since all technical systems and actors involved are integrated and operating in a synchronised manner, turning such process into a value-added ecosystem.

In an advantageous configuration of the e-commerce digital marketplace shopping system object of the present application, it is comprised by a processor unit, an advertising unit and a digital marketplace shopping unit, said units being operatively connected.

In particular, the processor unit comprises an item recognition module that is configured to process multimedia data being broadcast and played on a consumer terminal media player device, with the purpose of recognising at least one item and generate item metadata to extract relevant information about said items, such as name, category, colour, shape, size, etc. This information is then filtered by a filter module and is sent to the advertising unit, which uses it to target and personalise advertising related to the items recognised, by selecting specific consumer prone advertisements that are then transmitted back to the consumer terminal media player device. Through the visualization of advertising targeted to his interests, the consumer has the possibility to buy exchange items similar or complementary to the recognised items, in accordance with a consumer prone advertisement, since the system integrates a digital marketplace shopping unit.

The system thus provides a more interactive, dynamic and satisfying advertising and e-commerce experience for consumers, and greater profitability for advertisers and publishers.

### DESCRIPTION OF FIGURES

Figure 1 - representation of an embodiment of the e-commerce digital marketplace shopping system object of the present application. The reference signs represent:
   1 - processor unit;
      1.1 - item recognition module;
      1.2 - filter module;
   2 - advertising unit;
   3 - digital marketplace shopping unit;
   4 - user terminal media player device.
Figure 2 - schematic representation of the existing flow of interactions and data exchanged between the units and modules that make up the system of the present disclosure. The reference signs represent:
   1.1 - item recognition module;
   a.1- recognized item;
   a.2 - item metadata;
   1.2 - filter module;
   b - advertising fingerprint data;
   2 - advertising unit;
   c - user prone advertisement;
   4 - user terminal media player device;
   d - purchase request;
   3 - digital marketplace shopping unit;
   e - exchange item request;
   6 - exchange item provider or advertiser;
   f- purchase information;
   g - exchange item purchase action.

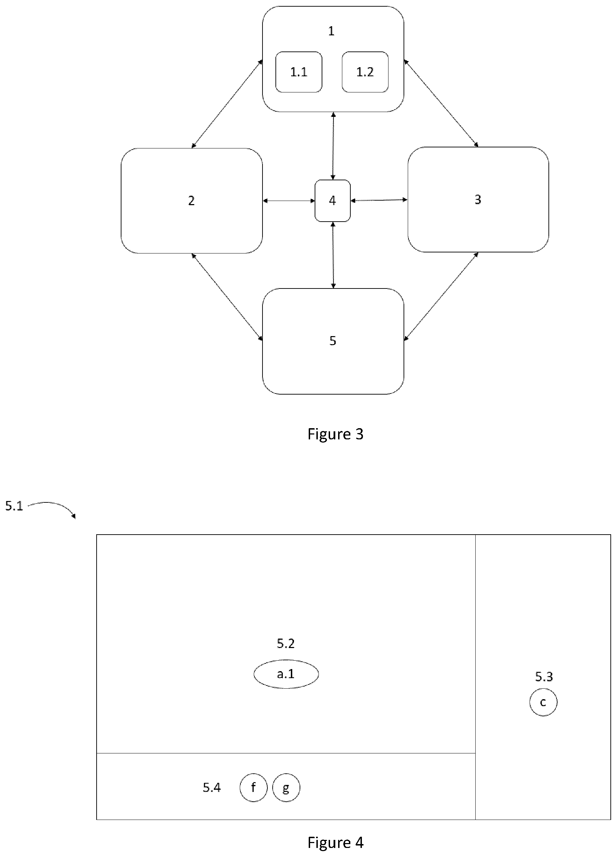

Figure 3 - representation of the e-commerce digital marketplace shopping system of the present disclosure according to another embodiment. The reference signs represent:
   1 - processor unit;
   1.1 - item recognition module;
   1.2 - filter module;
   2 - advertising unit;
   3 - digital marketplace shopping unit;
   4 - user terminal media player device;
   5 - user interface unit.
Figure 4 - representation of the user viewing platform of the user interface unit, according to an embodiment of the system herein described. The reference signs represent:
   5.1 - user viewing platform;
   5.2 - main display section;
   a.1 - recognized item;
   5.3 - first sub display section;
   c - user prone advertisement;
   5.4 - second sub display section;
   f - purchase information;
   g - exchange item purchase action.

### DETAILED DESCRIPTION

The more general configurations of the present disclosure are described in the Summary of the disclosure. Such configurations are detailed below in accordance with other advantageous and/or preferred embodiments of implementation of the present disclosure.

The present application describes an e-commerce digital marketplace shopping system, which consists of integrating the mechanisms and techniques of item recognition, advertising and marketplace, that are especially directed for e-commerce and are based on the processing of multimedia data, such as image and video data, that is made available on digital or analogue media, for example by broadcasting through a multimedia broadcasting architecture. Therefore, the system represents an integrated approach that, in its most general form of realisation, includes a processor unit (1), an advertising unit (2) and a digital marketplace shopping unit (3).

For the purposes of the following description, a 'consumer' will be referred to as a 'user' and an 'advertiser' as an 'exchange item provider'.

The processor unit (1) comprises an item recognition module (1.1) and a filter module (1.2).

The item recognition module (1.1) is configured to execute processing techniques directed to recognise items (a.1) contained in multimedia data being broadcast and played by the user terminal media player device (4).

In this context, it should be made clear that the operation of the system is carried out in parallel and synchronised with playing of multimedia data by the user terminal media player device (4). This means that user prone advertisements (c) are made available to the user via the player device (4) in real-time during multimedia data playback. Preferably, but not exclusively, the multimedia data relates to image or video data, so the system offers an e-commerce experience to the user by identifying exchange items that can be advertised and purchased, and which are related with items (a.1) contained in image or video data being played. In this sense, real-time execution is guaranteed through the integration of the different units (1, 2, 3) that make up the system and the use of processing schemes that will be described below.

The item recognition module (1.1) aims to recognise items (a.1) and generate item metadata (a.2) from multimedia data being broadcast and played by the player device (4). To this end, and as an initial step, a pre-processing stage may be carried out to normalise and adjust the resolution of the data frames constituting the image or video data to be processed. This preliminary data cleaning and normalisation stage improves the performance of the recognition task, in the processing stage.

In said processing stage, the item recognition module (1.1) may execute computer vision techniques, such as convolutional neural networks (CNN), to analyse each data frame to capture spatial characteristics and visual patterns that allow not only to recognize items (1.a) contained in said data frames, but also to generate related item metadata (a.2). This item metadata (a.2) may be further used to implement trend analysis strategies, adjust user profiles, predefine predictive analyses and metrics, and also to use it as input data for Data Managing Platforms for automatic/programmatic advertising as a new automatic advertising format. In addition, in order to improve the accuracy of item recognition and making recognition task more effective, the item recognition module (1.1) may also integrate deep learning techniques in conjunction with advanced pattern recognition and image boundary detection, either sequentially or in parallel, to achieve robust object identification.

More specifically, the item recognition module (1.1) can integrate advanced deep learning algorithms, such as YOLO, Faster R-CNN, or Mask R-CNN, which leverage CNNs to detect and classify items within the multimedia data being played by the user terminal media player device (4). These algorithms can be complemented with semantic, instance, or panoptic segmentation techniques, such as Fully Convolutional Networks (FCNs) or U-Net, to ensure precise pixel-level classification and distinction between object instances. For further refinement of object contours, modern CNN-based methods such as Deeplab, Holistically-Nested Edge Detection (HED), RefineNet, can inherently perform boundary detection, often making traditional methods like Canny Edge Detection less necessary.

In one embodiment of the system, the item recognition module (1.1) may integrate, in a sequential manner, deep learning, advanced analysis of complex patterns and image boundary detection techniques. More specifically, the use of (i.) CNN can be complemented with the sequential and interdependent integration of (ii.) deep learning algorithms, such as YOLO, Faster R-CNN or Mask R-CNN, (iii.) semantic segmentation, such as Fully Convolutional Networks or U-Net algorithms, instance, or panoptic algorithms, to segment data frames into distinct regions and classifying each pixel, and (iv.) image boundary detection techniques, in order to refine the contours of identified items (a.1) for better recognition accuracy. Finally, post-processing and analysis (v.) and model validation and training (vi.) stages are also executed.

These stages (i. to vi.) can be implemented according to a processing flow, where data frames are processed using each of the techniques in sequence, guaranteeing accuracy and efficiency in item (a.1) recognition. Additionally, the combination and sequential processing of these techniques (i. to vi.) makes it possible to establish a correct compromise between the quality and accuracy of item (a.1) recognition, and the speed of execution and provision of information (c, f) to the user.

The filter module (1.2) of the processor unit (1) is responsible for receiving item metadata (a.2) obtained by the item recognition module (1.1) and filtering it to generate advertising fingerprint data (b), according to a predefined criterion, eliminating irrelevant or redundant information. In particular, this module (1.2) may execute machine learning algorithms to carry out predictive analysis, using regression techniques, supervised or unsupervised learning, as well as recurrent neural networks (Pytorch or Tensorflow), in order to predict future trends and user behaviour, based on user contextual data, which results from the extraction of contextual metadata related to geographical location analysis, user behaviour and interaction history. More particularly, the predictive model being executed by the filter module (1.2) may be programmed to process said user contextual data, which may refer to a user profile reflecting a set of preferences and interests, which can be updated over time according to his history/record of interactions, in order to configure the filtering criterion to be applied to the item metadata (a.2) to generate advertising fingerprint data (b). In addition, the filter module (1.2) may also process data related to the items identified (a.1) in order to identify similar or complementary items that may be of interest to the user. In this way, a criterion is assigned in the generation of advertising fingerprint data (b), which ensures that relevant information is extracted in the context of the user, which speeds up and optimises the process of selecting user prone advertisements (c).

The advertising unit (2) is the unit of the system responsible for processing advertising fingerprint data (b) generated by the filter module (1.2) of the processor unit (1), in order to identify user prone advertisements (c) that best suit the user. To this end, the advertising unit (2) may be connected to an advertisement content database where a plurality of advertisements from exchange item providers (6) are stored.

More precisely, a digital advertising slot is a specific space (5.3) to be allocated on a user viewing platform (5.1), where advertisements are displayed. Each digital advertising slot is represented by advertising metadata that may relate with a set of advertising configuration parameters, such as size, duration, format and placement of the advertisement in the user viewing platform, among others. Advertising metadata may be stored in specific external advertising slot databases, that are managed by external publisher units, responsible for making an advertisement slot available to be used. It should be made clear that, in the context of the present application, external advertising slot databases, such as Google Ads, Amazon ads or PubMatic, and external publisher units are not part of the system, as the system is only provided with technical communication means adapted to integrate said external entities.

For this purpose, in one embodiment of the system, the advertising unit (2) may further comprise an advertising interface module, which is a computational entity provided with processing and communication means configured to operatively connect the advertising unit (2) to external advertising slot databases. According to such an embodiment, the advertising interface module is configured to generate advertising metadata by processing at least item metadata (a.2), and to transmit said advertising metadata to external advertising slot databases. The use of item metadata (a.2) to generate advertising metadata allows to characterise and restrict an advertising slot to advertisements related to a specific type of exchange item, for example footwear, clothing or food products. In another embodiment, the advertising interface module is configured to generate advertising metadata by processing item metadata (a.2) and a set of advertising configuration parameters related with size, duration, format and placement of the advertisement in the user viewing platform (5.1), and to transmit said advertising metadata to external advertising slot databases. The advertising interface module is further configured to provide to the advertising unit (2) the advertising slots that are made available by the external publisher units. The advertising unit, subsequently, selects from the advertisement content database, in accordance with the advertisement metadata characterizing the available digital advertising slot and the logic imposed by the advertising fingerprint data (b), a user prone advertisement (c) of an exchange item provider (6), to be displayed in said available digital advertising slot.

In fact, the segmentation and personalisation of advertisements, based on advertising fingerprint data (b), allows for the selection of user-prone advertisements (c) that are related to the items (a.1) and their metadata (a.2) recognized by the item recognition module (1.1) from the multimedia data being played by the user's player device (4), and which are of interest to the user as a result of the processing carried out by the filter module (1.2). Consequently, this unit (2) may also integrate recommendation systems to select user prone advertisements (c) in order to suggest exchange items, according to user contextual data and purchase history, thereby allowing to increase the conversion of adverts into purchases.

The digital marketplace shopping unit (3) offers users the chance to buy exchange items, in accordance with user prone advertisements (c), that correspond to the items (a.1) recognized from the multimedia data or that are similar or related to said items (a.1). The digital marketplace shopping unit (3), is operatively connected to the processor unit (1) and to the advertising unit (2), allowing advertising and e-commerce to be integrated, offering for sale, in real-time, exchange items which relates directly or indirectly with items (a.1) being recognized from the multimedia data being played by the user's player device (4), which makes it possible to increase the conversion of advertisements into purchases, and to reduce the steps and costs involved in transactions.

The system may also comprise a user interface unit (5) that provides a user viewing platform (5.1), allowing the user to watch the playback (5.2) multimedia data and, simultaneously and in real-time, to receive user prone advertisements (c) in a first sub display section (5.3), informing him of the possibility to purchase exchange items related with said multimedia data being broadcast. The organisation of content through display sections (5.2, 5.3, 5.4) allows the system to be non-invasive since the sub-displays (5.3, 5.4) only appear on the user viewing platform (5.1) at the user's request. More precisely, to benefit the non-invasive nature of the system, the user interface unit (5) may be configured to display an alert icon or a notification, that is preferably small and positioned in a peripheral location in relation to the display section (5.2), so as not to interfere with the visualisation of the content, and to inform the user that a certain frame of the multimedia content being broadcast has at least one exchange item available to be transacted. In this context, the first sub-display section (5.3) is programmed to become available at the user viewing platform (5.1) when the user selects said alert icon. In addition, the user viewing platform (5.1) may allow the user to interact with media player features to, for example, pause the multimedia data playback in order to capture a specific frame and be able to view the exchange items available and select those of interest, viewing in a second sub display section (5.4), the information related to the selected exchange item and related purchase information (f).

As a result, the system provides a more interactive, dynamic and satisfying advertising and e-commerce experience for users, who can see personalised and relevant advertisements and buy exchange items of interest based on the items (a.1) recognized from multimedia data being played in his player device (4), easily and conveniently. This increases the profitability and competitiveness of both exchange item providers (6) and publishers, who can reach a more qualified and engaged target audience and offer more suitable and attractive exchange items, in an efficient and automated way.

These advantages are only achievable because the system guarantees the integration of advertising and e-commerce functionalities in real-time and synchronised with the multimedia data being played by the user terminal media player device (4). To this end, the system uses intelligence and data processing techniques to identify items (a.1) and generate item metadata (a.2), which is then used to implement a predictive procedure to obtain automatic decisions about which advertising to display (c), allowing to segment and personalise advertising procedure, according to user's interests and preferences. As a consequence, the system advertises exchange items related to the recognised items (a.1), that are of interest to the user, stimulating the desire to buy via e-commerce. In addition, the integration of its own digital Marketplace shopping unit (3) offers a more interactive, dynamic and satisfying advertising and e-commerce experience for users.

### EMBODIMENTS

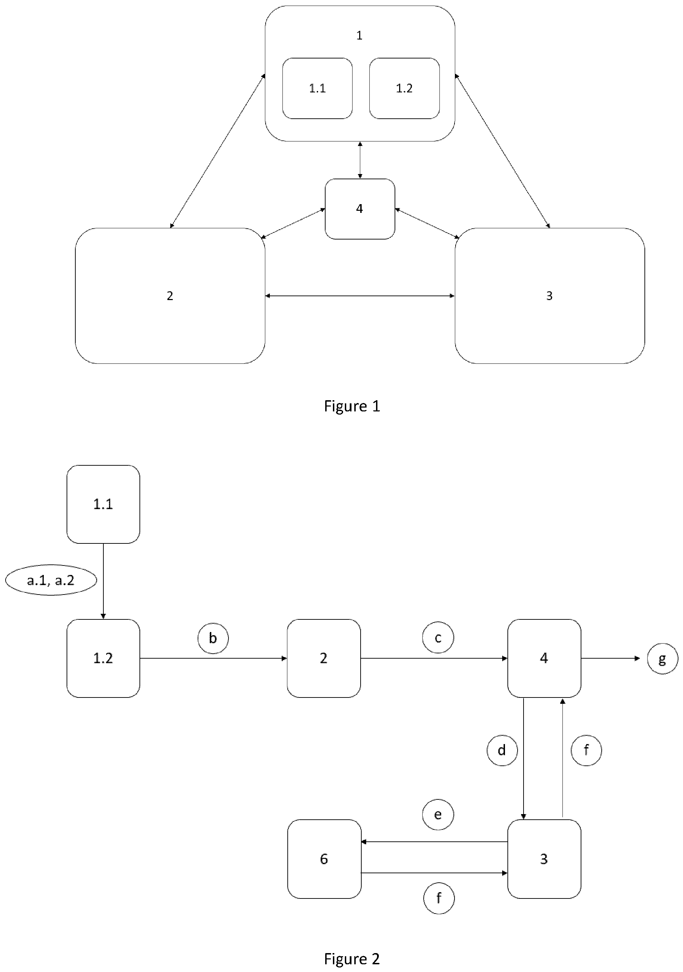

With reference to figures 1 and 2, in one embodiment of the system, it is comprised by a processor unit (1), an advertising unit (2) and a digital marketplace shopping unit (3), said units being operatively connected.

The system may further comprise a data wireless communication network configured to operatively connect said processor unit (1), advertising unit (2) and digital marketplace shopping unit (3) and also a user terminal media player device (4).

The user terminal media player device (4), may be any type of processing device with communication capabilities and adapted to process and display multimedia data, such as a mobile device like a smartphone or a tablet, or a smart TV. In the context of the present application, multimedia data may relate to image or video data, comprised of at least one data frame.

In a preferred aspect of the system, it is integrated with a multimedia content broadcasting system. In the context of the present application, the term broadcast should not be interpreted as being limited to the distribution of television content via respective television infrastructure. On the contrary, a multimedia content broadcasting system is to be considered as any communication system able to interconnect at least one broadcaster terminal and at least one user terminal media player device (4), and which may be implemented through any known over-the-air (radio, satellite), over-the-top (webcasting) or cable type communication infrastructure. In this context, a broadcaster terminal shall also be construed in a non-limiting manner as referring to any entity, individual or collective, responsible for creating and/or broadcasting multimedia content via a broadcasting system. An individual broadcaster is generally considered to be any person, provided with broadcasting means. For example, it may be a social media user who broadcasts multimedia content via a broadcasting system that is integrated into the social media network. A collective broadcaster is generally considered a public or private multimedia distribution organization, such as NETFLIX. In another example, the collective broadcaster streams multimedia content via an OTT infrastructure.

The processor unit (1) comprises an item recognition module (1.1) configured to process multimedia data being played on a user terminal media player device (4), in order to recognize at least one item (a.1) and to generate respective item metadata (a.2).

In one embodiment of the system, the item recognition module (1.1) of the processor unit (1) may comprise processing means configured to implement a convolutional neural network to process data frames in order to recognize at least one item (a.1) and to generate respective item metadata (a.2).

In another embodiment of the system, the processing means of the item recognition module (1.1) may be further configured to execute deep learning techniques, such as YOLO, Faster R-CNN or Mask R-CNN. As a complementary and sequential processing stage, the processing means of the item recognition module (1.1) may be further configured to execute semantic, instance or panoptic segmentation techniques, and to execute Image Boundary Detection techniques. The combination and sequential processing of these techniques makes it possible to establish the correct compromise between the quality and accuracy of item (a.1) recognition, and the speed of execution and provision of information (c, f) to the user.

The processor unit (1) further comprises a filter module (1.2) configured to process item metadata (a.2) to generate advertising fingerprint data (b) related with at least the recognized item (a.1) and the respective item metadata (a.2).

In one embodiment of the system, the filter module (1.2) may comprise processing means adapted to implement a machine learning architecture configured to execute a predictive model. Said predictive model may be a regression model algorithm, a supervised or unsupervised learning algorithm or a recurrent neural network algorithm, such as Pytorch or Tensorflow, and is programmed to process user contextual data to determine a filter criterion, according to which item metadata (a.2) is processed in order to generate advertising fingerprint data (b). In this context, user contextual data may relate to user personal information, location information, user pre-defined preferences/interests and/or user historical purchase data record.

The advertising unit (2) is operatively coupled to at least one advertisement content database and comprises processing and communication means configured to process at least advertising fingerprint data (b) to select at least one user prone advertisement (c) from an advertisement content database, and to provide at least one user prone advertisement (c) to the user terminal media player device (4).

In another embodiment of the system, the advertising unit (2) comprises an advertising interface module, provided with processing and communication means adapted to operatively connect the advertising unit (2) to external advertising slot database, where advertising metadata associated with digital advertising slots are stored. The advertising interface module is configured to generate advertising metadata by processing at least item metadata (a.2), and optionally item metadata (a.2) and advertising configuration parameters related with size, duration, format and placement of the advertisement in the user viewing platform (5.1), and to transmit said advertising metadata to external advertising slot databases. The advertising interface module is further configured to provide to the advertising unit (2) the advertising slots that are made available by external publisher units, which is configured to, subsequently, select from the advertisement content database, in accordance with the advertisement metadata characterizing the available digital advertising slot and the logic imposed by the advertising fingerprint data (b), a user prone advertisement (c) of an exchange item provider (6), to be displayed in said available digital advertising slot.

In one embodiment of the system, the processing means of the advertising unit (2) may be further configured to process advertising fingerprint data (b), generated based on the filter criterion determined from user contextual data, to select at least one user prone advertisement (c) from an advertisement content database. In this context, an exchange item in accordance with a user prone advertisement (c) may be an item (a.1) recognized by the item recognition module (1.1) of the processor unit (1) and/or an item similar (an item with a same appearance) or related to (an item that fulfils the same or related function) an item recognized by the item recognition module (1.1) of the processor unit (1).

The digital marketplace shopping unit (3) comprises processing and communication means programmed to implement an e-commerce platform.

Said e-commerce platform may be operable to, as a first action, receive, from a user terminal media player device (4), a purchase request (d) for an exchange item in accordance with a user prone advertisement (c), i.e. following a user prone advertisement (c) the user has watched, he expresses an interest in purchasing the exchange item advertised (c). In a preferred embodiment of the system, the operation of the e-commerce platform runs in parallel with the broadcast of multimedia content. In other words, all the operations of this platform, in particular those enabling the purchase of an exchange item, are carried out in parallel, that is during, the broadcast of the multimedia content, which may be achieved by means of special technical features assigned to a user interface unit (5), such as those described below.

As a second action, the platform is operable to generate an exchange item request (e) regarding at least said exchange item and to transmit said exchange item request (e) to at least one exchange item provider (6) associated with exchange item of the purchase request (d). In this context, the digital marketplace shopping unit (3) may comprise a processing and communication architecture that makes it possible to integrate multiple exchange item providers (6), that are registered in the advertisement content database. The transmission of the exchange item request (e) to a specific provider (6) may follow a certain logic, which is not within the scope of the present description.

As a third action, the platform is operable to execute a purchase process by receiving from the exchange item provider (6), purchase information (f) related with the exchange item being purchased, and by providing said purchase information (f) to the user terminal media player device (4) to enable an exchange item purchase action (g). The purchase stage is not the subject of the present description, and is carried out using state-of-the-art communication and processing schemes, which guarantee that the purchase action (g) is carried out reliably and securely.

In another embodiment of the system, in accordance with figures 3 and 4, it further comprises a user interface unit (5), which is operatively connected with the processor, advertising and marketplace units (1, 2, 3) and with the user terminal media player device (4).

The user interface unit (5) may comprise processing and communication means configured to implement a user viewing platform (5.1) adapted to:
- provide in a main display section (5.2), multimedia data containing items (a.1) recognizable by the item recognition module (1.1) of the processing unit (1);
- provide in a first sub display section (5.3), user prone advertisements (c) to be transmitted by the advertising unit (2);
- establish a bidirectional communication link with the digital marketplace shopping unit (3) adapted to execute exchange item purchase actions (g) and to provide said information in a second sub display section (5.4).

More particularly, in accordance with figure 4, the user interface unit (5) may be further configured to receive multimedia data from a multimedia data broadcaster and to process said multimedia data in order to display it in the main display section (5.2). Additionally, the processor, advertising and user interface units (1, 2, 5) and the user terminal media player device (4), may be operationally configured to enable the user interface unit (5) to provide user prone advertisements (c) in the first sub display section (5.3) and multimedia data in the main display section (5.2) in a synchronized fashion, so that an exchange item in accordance with a user prone advertisement (c) generated by the advertising unit (2) is related to an item (a.1) recognized by the processor unit's item recognition module (1.1) from the multimedia data being played by the player device (4). The organisation of content through display sections (5.2, 5.3, 5.4) allows the system to be non-invasive.

In another embodiment, the user interface unit (5) may further comprise storage means adapted to implement a structured database configured to associate a user prone advertisement (c) with multimedia data. Additionally, the user viewing platform (5.1) may be further adapted to provide user access to said database.

In another embodiment of the system, the processor unit (1) may further comprise a database module adapted to store user contextual data. The database module may comprise a computational agent configured to periodically update user contextual data related to a user, which makes it possible to provide the filter module (1.2) with up-to-date information on the user and which is necessary to favour the efficient selection of user prone advertisement (c).

Of course, the preferred embodiments shown above are combinable, in the different possible forms, being herein avoided the repetition all such combinations.

## Claims

1. An e-commerce digital marketplace shopping system, comprising a processor unit (1), an advertising unit (2) and a digital marketplace shopping unit (3), said units being operatively connected and wherein:
the processor unit (1) comprises:
- an item recognition module (1.1) configured to process multimedia data being played on a user terminal media player device (4), in order to recognize at least one item (a.1) and to generate respective item metadata (a.2);
- a filter module (1.2) configured to process item metadata to generate advertising fingerprint data (b) related with at least the recognized item (a.1) and the respective item metadata (a.2);
the advertising unit (2) being operatively coupled to at least one advertisement content database and comprises processing and communication means configured to:
- process at least advertising fingerprint data (b) to select at least one user prone advertisement (c) from an advertisement content database; and to
- provide at least one user prone advertisement (c) to the user terminal media player device (4);
the digital marketplace shopping unit (3) comprising processing and communication means programmed to implement an e-commerce platform operable to:
- receive, from a user terminal media player device (4), a purchase request (d) for an exchange item in accordance with a user prone advertisement (c);
- generate an exchange item request (e) regarding at least said exchange item and transmit said exchange item request (e) to at least one exchange item provider (6) associated with exchange item of the purchase request (d);
- execute a purchase process by receiving from the exchange item provider (6), purchase information (f) related with the exchange item, and by providing said purchase information (f) to the user terminal media player device (4) to enable an exchange item purchase action (g).

2. The system according to claim 1, further comprising a data wireless communication network configured to operatively connect the processor unit (1), the advertising unit (2), the digital marketplace shopping unit (3) and the user terminal media player device (4); and wherein,
the user terminal media player device (4) is a mobile device, such as a smartphone or a tablet, or a smartTV.

3. The system according to any of the previous claims, further comprising a user interface unit (5) being operatively connected with the processor, advertising and digital marketplace shopping units (1, 2, 3) and with the user terminal media player device (4); said unit (5) comprising processing and communication means configured to implement a user viewing platform (5.1) adapted to:
- provide in a main display section (5.2), multimedia data containing items (a.1) recognizable by the item recognition module (1.1) of the processing unit (1);
- provide in a first sub display section (5.3), user prone advertisements (c) to be transmitted by the advertising unit (2);
- establish a bidirectional communication link with the marketplace unit (3) adapted to execute an exchange item purchase action (g) and provide said information in a second sub display section (5.4).

4. The system according to claim 3, wherein the user interface unit (5) being further configured to receive multimedia data from a multimedia data broadcaster and to process said multimedia data in order to display it in the main display section (5.2).

5. The system according to claim 4, wherein the processor, advertising and user interface units (1, 2, 5) and the user terminal media player device (4), are operationally configured to enable the user interface unit (5) to provide user prone advertisements (c) in the first sub display section (5.3) and multimedia data in the main display section (5.2) in a synchronized fashion, so that
an exchange item in accordance with a user prone advertisement (c) generated by the advertising unit (2) is related to an item (a.1) recognized by the processor unit's item recognition module (1.1) from the multimedia data being broadcast.

6. The system according to any of the previous claims 3 to 5, wherein the user interface unit (5) further comprises storage means adapted to implement a structured database configured to associate a user prone advertisement (c) with multimedia data; and wherein,
the user viewing platform (5.1) is further adapted to provide user access to said database.

7. The system according to any of the previous claims, wherein the multimedia data includes image or video data, comprised of at least one data frame; and wherein, item metadata (a.2) relates to at least item category, color, shape or size.

8. The system according to claim 7, wherein the item recognition module (1.1) comprises processing means configured to implement a convolutional neural network to process a data frame in order to recognize at least one item (a.1) and to generate respective item metadata (a.2).

9. The system according to claim 8, wherein the processing means of the item recognition module (1.1) are further configured to execute deep learning algorithms, such as YOLO, Faster R-CNN or Mask R-CNN; and wherein, the processing means of the item recognition module (1.1) are further configured to execute semantic, instance or panoptic segmentation techniques adapted to classify each pixel of a data frame and to identify and segment items within a data frame.

10. The system according to any of the claim 8 or 9, wherein the processing means of the item recognition module (1.1) are further configured to execute Image Boundary Detection techniques.

11. The system according to any of the previous claims, wherein the filter module (1.2) of the processor unit (1) comprises processing means adapted to implement a machine learning architecture configured to execute a predictive model; said predictive model being programmed to process user contextual data to determine a filter criterion; user contextual data relates to user personal information, location information, user pre-defined preferences and/or user historical purchase data record; and wherein,
the filter module (1.2) being further configured to process item metadata according to the filter criterion, in order to generate advertising fingerprint data (b).

12. The system according to claim 11, wherein the processing means of the advertising unit (2) are configured to process advertising fingerprint data (b) to select at least one user prone advertisement (c) from an advertisement content database; and wherein,
an exchange item in accordance with a user prone advertisement (c) being:
an item (a.1) recognized by the item recognition module (1.1) of the processor unit (1); and/or
an item similar or related to an item recognized by the item recognition module (1.1) of the processor unit (1).

13. The system according to claim 11 or 12, wherein the predictive model is a regression model algorithm, a supervised or unsupervised learning algorithm or a recurrent neural network algorithm, such as Pytorch or Tensorflow.

14. The system according to any of the previous claims 11 to 13, wherein the processor unit (1) further comprises a database module adapted to store user contextual data, the database module comprising a computational agent configured to periodically update user contextual data related to a user.

15. The system according to any of the previous claims, wherein the advertising unit (2) further comprises an advertising interface module provided with processing and communication means adapted to operatively connect the advertising unit (2) to an external advertising slot database managed by an external publisher unit and adapted to store advertising metadata associated with digital advertising slots; and wherein,
the advertising interface module is configured to generate advertising metadata by processing at least item metadata (a.2), and to transmit the generated advertising metadata to external advertising slot databases; optionally, the advertising interface module is configured to generate advertising metadata by processing item metadata (a.2) and advertising configuration parameters related with size, duration, format and placement of the advertisement in a user viewing platform (5.1), and to transmit the generated advertising metadata to external advertising slot databases; and wherein,
the advertising interface module is further configured to provide to the advertising unit (2), digital advertising slots that are made available by external publisher units; and wherein,
the advertising unit (2) is configured to select at least one user prone advertisement (c) from the advertisement content database, based on advertisement metadata characterizing an available digital advertising slot and the advertising fingerprint data (b).
